(19) Europäisches Patentamt
European Patent Office
Office européen des brevets

(11) EP 4 269 098 A1

(12) EUROPEAN PATENT APPLICATION
published in accordance with Art. 153(4) EPC

(43) Date of publication:
**01.11.2023 Bulletin 2023/44**

(21) Application number: **21911021.0**

(22) Date of filing: **24.12.2021**

(51) International Patent Classification (IPC):
***B32B 27/18*** *(2006.01)* ***H01B 5/00*** *(2006.01)*
***H01B 5/14*** *(2006.01)* ***G06F 3/041*** *(2006.01)*

(52) Cooperative Patent Classification (CPC):
**B32B 27/18; G06F 3/041; H01B 5/00; H01B 5/14**

(86) International application number:
**PCT/JP2021/048067**

(87) International publication number:
**WO 2022/138882 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 JP 2020215258**

(71) Applicant: **Resonac Corporation**
**Tokyo 105-8518 (JP)**

(72) Inventors:
- **KUWAHARA Jun**
**Tokyo 105-8518 (JP)**
- **YAMAKI Shigeru**
**Tokyo 105-8518 (JP)**

(74) Representative: **Strehl Schübel-Hopf & Partner**
**Maximilianstrasse 54**
**80538 München (DE)**

# (54) TRANSPARENT ELECTROCONDUCTIVE FILM LAMINATE

(57) Provided is a transparent conducting film laminate suitable for three-dimensional molding having a curved surface. A transparent conducting film laminate comprising: a transparent substrate made of a transparent thermoplastic resin film, a transparent conducting film formed on at least one main face of the transparent substrate, and containing a binder resin and a metal nanowire, and a protection film formed on the transparent conducting film, and containing a resin component, wherein the binder resin contains at least on kind of poly-N-vinylacetamide, a copolymer containing 70 mol% or more of N-vinylacetamide (NVA) as a monomer unit, and a cellulose-based resin, and 94% by mass or more of the resin component constituting the protection film is derived from a thermoplastic resin.

EP 4 269 098 A1

## Description

### Technical Field

The present disclosure relates to a transparent conducting film laminate. In more detail, the present disclosure relates to a transparent conducting film laminate suitable for three-dimensional processing (solid molding).

### Background Art

A transparent conducting film is used in various fields such as a transparent electrode for devices such as a liquid crystal display (LCD), a plasma display panel (PDP), an organic electroluminescence type display, photovoltaics (PV), and a transparent electrode for a touch panel (TP), etc., an electro-static discharge (ESD) film, and an electromagnetic interference (EMI) film, etc. For these transparent conducting films, conventionally, a film using ITO (Indium Tin Oxide) has been used. However, there are drawbacks that the supply stability of indium is low, the production cost is high, the flexibility is inferior, and a high temperature is required when the film is formed. Therefore, transparent conducting films which can replace the ITO film has been actively searched. Among such films, a transparent conducting film containing metal nanowires is preferable as a transparent conducting film substituting the ITO film, in view of its superior conductivity, optical property, and flexibility, and its advantages that a film can be formed by a wet process, a production cost is low, and a high temperature is not required at the time of forming a film, and the like. For example, a transparent conducting film containing silver nanowires, and having a superior conductivity, optical property, and flexibility is known (refer to Patent Document 1).

On the other hand, a transparent conducting film containing silver nanowires has drawbacks that a surface area per mass of silver is large, and the film easily reacts with various compounds leading to the lack of environmental resistance. Due to the influences of various medical agents and cleaning solutions used in processing steps, influences of oxygen and moisture in the air to which the film is exposed during its long-term storage, and the like, the nano-structure body tends to be corroded, and the conductivity tends to be lowered. Further, in particular, when the film used as an electronic material, in order prevent fine-particle impurities, dirt, dust, etc., from adhering and mixing, onto the substrate surface, a physical cleaning step using a brush, etc., is often applied, and the step may cause a problem of damaging the surface.

In order to solve these, there has been a lot of trials of stacking a protection film on the surface of the transparent conducting film containing silver nanowires to provide hardness and environmental resistance to the transparent conducting film. Further, wires from an electronic circuit must be in electrical contact with the transparent conducting film, and thus, a protection film capable of maintaining electrical contact from the protection film surface to the transparent conducting film has been desired.

In order to solve these, the following Patent Document 2 discloses a transparent conducting film provided with a protection film capable of maintaining an electrical contact with the transparent conducting film containing conducting fibers, and capable of providing a high environmental resistance to the transparent conducting film, as well as a production method thereof.

On the other hand, recently, as touch panels and touch pads have become popular, they are mounted on a large variety of devices, and in order to further increase the operability of the devices, a touch panel and a touch pad having a touch surface in a three-dimensional shape including a curved face, have been proposed.

For example, Patent Document 1 discloses an electrostatic capacitance type touch panel having a three-dimensional curved touch face, which is a laminate provided with a transparent base sheet, and a main electrode layer provided on one face of the transparent base sheet and having a plurality of main electrode regions formed by a conducting ink so that a dried coated film has an elongation rate of 10% or less, and a visible light transmittance of 90% or more, and the laminate being subjected to a drawing process while heated and softened to form a mold having a three-dimensional curved face.

More specifically, in a method for producing a three-dimensional curved-face touch panel disclosed in Patent Document 1, first, a main electrode layer having a plurality of main electrode regions formed by using a conducting ink containing an organic conducting material, is provided on a surface of a transparent base sheet. Next, the main electrode layer is subjected to a drawing process so that an auxiliary electrode layer having auxiliary electrode regions is provided at the periphery of the three-dimensional curve. Thereafter, a laminate made of these three layers is subjected to a drawing process under heated and softened conditions, to form a three-dimensional curved face, which is cooled or left as it is to be cooled to obtain an object having a curved face. Focusing attention on the feature that carbon nanotubes or PEDOT, etc. have a better elongation ability than metal nano fibers, metal nanowire fibers are used for the main electrode regions having a small elongation during the drawing process, whereas carbon nanotubes or PEDOT, etc., are used for the auxiliary electrode regions having a large elongation.

Patent Document 2 discloses a thermoformable laminate having (A) a film for thermoforming containing polycarbonate as a main component, (B) an adhesive layer, and (C) transparent conducting layer, in stacked in this order.

Patent Document 3 discloses a transparent conducting substrate comprising a base, a transparent conducting film formed on at least on one main face of the base and containing a binder resin and conducting fibers, and a protection film formed on the transparent conducting film, wherein the binder resin has a thermal decomposition initial temperature of 210°C or higher, and the protection film is a thermoset film of a thermosetting resin.

Prior Arts

Patent Document

Patent Document 1: Japanese Unexamined Patent Publication (Kokai) No. 2013-246741
Patent Document 2: Japanese Unexamined Patent Publication (Kokai) No. 2021-70181
Patent Document 3: WO 2018/101334


Summary

However, regarding the conducting ink layer (conducting layer), used in the production method of Patent Document 1, which is formed by the conducting ink containing an organic conducting material such as carbon nanotubes or PEDOT, the organic material itself has a high resistance value of 50 Ω/□ or more, and the elongation of the conducting layer at the time of deformation tends to further increase the resistance value, leading to disadvantages in industrial production.

On the other hand, a metal layer formed by metal and having a mesh shape with an open area rate of 90% or more has a low resistance value of 1 Ω/□ or less, which is lower than that of the organic conducting material, and thus, the metal layer is superior in conductivity.

Meanwhile, when a conducting film having a resin substrate on which a metal layer formed by metal-plating, metal evaporation, etc., is used to make a solid shape (three-dimensional shape), as the resin substate is elongated, the metal layer cannot be elongated to the same extent and is often fractured. Thus, measures disclosed in Patent Document 1 should be taken.

Patent Document 2 discloses that (C) transparent conducting layer is composed of a conducting paste or a metal mesh layer, but fails to disclose that a protection film is provided on (C) transparent conducting layer, and fails to disclose a structure of the protection film suitable for thermoforming.

Patent Document 3 discloses a transparent conducting film provided with a protection film, but discloses no intension to give a solid shape (three-dimensional shape), and thus, fails to disclose a structure of a protection film suitable for giving a solid shape (three-dimensional shape).

Therefore, in view of the above, one of the objectives of the present disclosure is to easily provide a transparent conducting film laminate suitable for three-dimensional molding having a curved face.

The inventors of the present disclosure have keenly studied to solve the above problems, and as a result, the inventors have found out that a transparent conducting film laminate provided with a transparent substrate made of a transparent thermoplastic resin film, a transparent conducting film having a resin material mainly composed of a thermoplastic resin having a small increase of a resistance value at the time of elongation, and a silver nanowire having a superior flexibility as a conducting member, and a protection film mainly composed of a thermoplastic resin, is suitable for three-dimensional molding.

The present disclosure includes the following aspects.

[1] A transparent conducting film laminate comprising: a transparent substrate made of a transparent thermoplastic resin film, a transparent conducting film formed on at least one main face of the transparent substrate, and containing a binder resin and a metal nanowire, and a protection film formed on the transparent conducting film, and containing a resin component, wherein the binder resin contains at least on kind of poly-N-vinylacetamide, a copolymer containing 70 mol% or more of N-vinylacetamide (NVA) as a monomer unit, and a cellulose-based resin, and 94% by mass or more of the resin component constituting the protection film is derived from a thermoplastic resin.

[2] A transparent conducting film laminate according to [1], wherein the binder resin at least one of poly-N-vinylacetamide, and a copolymer containing 70 mol% or more of N-vinylacetamide (NVA) as a monomer unit.

[3] A transparent conducting film laminate according to [1] or [2], wherein transparent thermoplastic resin film is a polycarbonate film.

[4] A transparent conducting film laminate according to any one of [1] to [3], wherein the binder resin is poly-N-vinylacetamide.

[5] A transparent conducting film laminate according to any one of [1] to [4], wherein the resin component constituting the protection film is derived from a thermoplastic resin containing polyurethane containing a carboxy group or ethyl cellulose.

[6] A transparent conducting film laminate according to [5], wherein, the resin component constituting the protection film is derived from a polyurethane containing a carboxy group and an epoxy resin containing two or more epoxy groups in a molecule, a content of the epoxy resin having two more epoxy groups in one molecule in the resin component is more than 0% by mass and 6% by mass or less, and regarding the carboxy group (COOH) contained in the polyurethane containing a carboxy group and the epoxy group (Ep) contained in the epoxy resin having two more epoxy groups in one molecule, the molar ratio (Ep/COOH) is more than 0 and 0.02 or less.

[7] A transparent conducting film laminate according to any one of [1] to [6], wherein the metal nanowire is a silver nanowire.

[8] A transparent conducting film laminate for molding comprising a transparent conducting film laminate according to any one of [1] to [7], and a resin film mainly composed of polycarbonate.

Using the transparent conducting film laminate according to the present disclosure, a three-dimensional molded body having a superior conductivity and transparency even after the three-dimensional molding can be obtained, which is suitable for molding a molded object having a curved shape, such as a touch panel having a curved shape.

Aspects of Disclosure

Hereinbelow, aspects of the present disclosure (hereinbelow, referred to as aspects) will be explained.

A transparent conducting film laminate according to the present aspect comprises a transparent substrate made of a transparent thermoplastic resin film, a transparent conducting film formed on at least one face of the transparent substrate and containing a binder resin and metal nanowires, and a protection film formed on the transparent conducting film and containing a resin component, wherein the binder resin contains at least one of poly-N-vinylacetamide, a copolymer containing 70 mol % or more of N-vinylacetamide (NVA) as a monomer unit, and a cellulose-based resin, and 94% by mass or more of the resin component constituting the protection film is derived from a thermoplastic resin. In the present specification, the term "transparent" refers to that the total light transmittance (transparency to visible light) is 75% or more.

<Transparent Substrate>

The transparent substrate may be colored, but preferably has a high total light transmittance (transparency to visible light), the total light transmittance being preferably 80% or higher. A transparent substrate that can be used is a thermoplastic resin film, and examples of the thermoplastic resin film include: polyester (polyethylene terephthalate [PET], polyethylene naphthalate [PEN], etc.), polycarbonate, acrylic resin (polymethyl methacrylate [PMMA], etc.), cycloolefin polymer, and the like. Among resin films, an amorphous thermoplastic resin film showing a superior molding property for three-dimensional molding, is preferable. Therefore, among the above resin films, polycarbonate and a cycloolefin polymer, which are amorphous, are preferable, and polycarbonate is more preferable. Polycarbonate is not limited as far as the molecular main-chain includes -[O-R-OCO]- unit having a carbonate ester bond (R including an aliphatic group, an aromatic group, or both of an aliphatic group and an aromatic group, and further having a straight-chain structure or a branched structure). Examples of the cycloolefin polymer include: hydrogenated ring-opening metathesis polymerization type cycloolefin polymer of norbornene (ZEONOR (registered trademark, manufactured by Zeon Corporation), ZEONEX (registered trademark, manufactured by Zeon Corporation), ARTON (registered trademark, manufactured by JSR Corporation), etc.), norbornene/ethylene addition copolymer type cycloolefin polymer (APEL (registered trademark, manufactured by Mitsui Chemicals Inc.), TOPAS (registered trademark, manufactured by Polyplastics Co., Ltd.)). Specific example of polycarbonate is Iupilon (registered trademark, manufactured by Mitsubishi Gas Chemical Company, Inc.), and Panlite (registered trademark, manufactured by Teijin Limited). Among these, the material having a glass transition temperature (Tg) 90 to 170°C is preferable because of its resistance against heat which may be applied during the production process such as lead wiring, connector part production, and the like, and having a glass transition temperature (Tg) of 125 to 160°C is more preferable. The thickness is preferably 10 to 500 μm, more preferably 25 to 250 μm, and still more preferably 40 to 150 μm.

<Transparent Conducting Film>

Metal nanowires are used as a conducting member constituting the transparent conducting film. The metal nanowire is a flexible material although the elongation ability thereof is lower than that of a carbon nanotube. From the

viewpoint of transparency, the metal nanowire is more preferable than the carbon nanotube. Further, it has been previously confirmed that when a conducting ink having metal nanowires in combination with a specific binder resin (the below-mentioned poly-N-vinylacetamide (PNVA (registered trademark))) is used, wires free from drawbacks such as disconnection, etc., even if 15% distortion is applied, can be formed. However, The poly-N-vinylacetamide (PNVA (registered trademark) has moisture absorbency, which causes the sheet resistance value of the transparent conducting film unstable. Therefore, a protection film for covering its surface should be provided. The metal nanowire is a conducting material made of metal and having a wire shape with a diameter in the order of nanometer. In the present aspect, in addition to (by mixing with) or instead of the metal nanowire, metal nanotube which is a conducting material having a porous or nonporous tubular shape, may be used. In the present specification, both the "wire shape" and the "tubular shape" refer to a linear shape, but the former refers to a solid body, while the latter refers to a hollow body. Both may be soft or rigid. The former is referred to as "metal nanowire in a narrow sense", the latter is referred to as "metal nanotube in a narrow sense" , and the term "metal nanowire" is used to include both the metal nanowire in a narrow sense and the metal nanotube in a narrow sense. Only the metal nanowire in a narrow sense, or only the metal nanotube in a narrow sense may be used, or they may be mixed for use.

The transparent conducting film is formed on the transparent substrate in a way so that the metal nanowires form intersections, and light can be transmitted through openings where no metal nanowires are formed. Constituting a nano structure network having intersections of metal nanowires is preferable, and forming a nano structure network in which at least a part of the intersections is fused is more preferable. The fact that the intersections of the metal nanowires are fused can be confirmed by the electron diffraction pattern analysis by a transmission electron microscope (TEM). Specifically, an electron diffraction pattern of the part where the metal nanowires intersect is analyzed, to confirm that the crystal structure is changed (recrystallization occurs).

As a method for producing the metal nanowire, a known method may be applied. For example, silver nanowires may be synthesized by reducing the silver nitrate under the presence of polyvinylpyrrolidone, using a polyol method (refer to Chem. Mater., 2002, 14, 4736). Similarly, gold nanowires may be synthesized by reducing the gold chloride acid hydrate under the presence of polyvinylpyrrolidone (refer to J. Am. Chem. Soc., 2007, 129, 1733). WO 2008/073143 pamphlet and WO 2008/046058 pamphlet have detailed description regarding the technology of large scale synthesis and purification of silver nanowires and gold nanowires. Gold nanotubes having a porous structure may be synthesized by using silver nanowires as templates, and reducing a gold chloride acid solution. The silver nanowires used as templates are dissolved in the solution by oxidation-reduction reaction with the gold chloride acid, and as a result, gold nanotubes having a porous structure can be produced (refer to J. Am. Chem. Soc., 2004, 126, 3892-3901).

The metal nanowires have an average diameter size of preferably 1 to 500 nm, more preferably 5 to 200 nm, still more preferably 5 to 100 nm, and particularly preferably 10 to 50 nm. The metal nanowires have an average major axis length of preferably 1 to 100 μm, more preferably 1 to 80 μm, still more preferably 2 to 70 μm, and particularly preferably 5 to 50 um. While satisfying the above average diameter size and the average major axis length, the metal nanowires have an average aspect ratio of preferably more than 5, more preferably 10 or more, still more preferably 100 or more, and particularly preferably 200 or more. Here, the aspect ratio refers to a value obtained by a/b, wherein "b" is approximated to an average diameter size of the metal nanowire and "a" is approximated to an average major axis length thereof. The values "a" and "b" may be measured by a scanning electron microscope (SEM) and an optical microscope. Specifically, "b" (average diameter) is obtained by measuring sizes of any selected 100 silver nanowires respectively using the Field Emission Scanning Electron Microscope JSM-7000F (manufactured by JEOL Ltd.), and calculating the arithmetic average thereof. Further, "a" (average length) is obtained by measuring sizes of any selected 100 silver nanowires respectively using the Shape Measurement Laser Microscope VK-X200 (manufactured by Keyence Corporation), and calculating the arithmetic average thereof.

A material for the metal nanowires may be one selected from the group consisting of gold, silver, platinum, copper, nickel, iron, cobalt, zinc, ruthenium, rhodium, palladium, cadmium, osmium, and iridium, or may be an alloy etc., formed by combining some of these. In order to obtain a coating film having a low sheet resistance and a high total light transmittance, containing at least one of gold, silver, and copper is preferable. These metals have a high conductivity, and thus, when a certain sheet resistance should be obtained, the density of the metal within the surface may be reduced, and high total light transmittance can be achieved. Among these metals, containing at least gold or silver is more preferable. The most appropriate example may be the silver nanowire.

The transparent conducting film contains metal nanowires and a binder resin. As for the binder resin, a resin having transparency and superior processability can be generally used. In case that metal nanowire produced by the poly-ol method is used as a conducting fiber, a binder resin soluble in alcohol, water or a mixture solvent of alcohol and water is preferable, in view of the compatibility to the solvent for production (polyol). According to an aspect, the binder contains at least one of poly-N-vinylacetamide (PNVA (registered trademark)), a copolymer of N-vinylacetamide, and a cellulose-based resin. As for the binder resin, one of poly-N-vinylacetamide (PNVA (registered trademark)), a copolymer of N-vinylacetamide, and a cellulose-based resin may be used solely, but a plurality of types thereof may used in combination. As for the cellulose-based resin, one of the below-mentioned resins may be used solely, but a plurality of

types thereof may be used in combination. In view of the post process, using a binder having a high heat resistance is preferable, and with this respect, poly-N-vinylacetamide (PNVA (registered trademark)) is more preferable.

Poly-N-vinylacetamide is a homopolymer of N-vinylacetamide (NVA), but a copolymer having 70 mol% or more of N-vinylacetamide (NVA) as a monomer unit may also be used. Examples of a monomer which can be copolymerized with NVA include: N-vinylformamide, N-vinylpyrrolidone, acrylic acid, methacrylic acid, sodium acrylate, sodium methacrylate, acrylamide, acrylonitrile, and the like. The more the content of the copolymerized component, the higher the sheet resistance of the transparent conducting film to be obtained, the lower the miscibility, the lower the adhesion with the substrate, and the lower the heat resistance (thermal decomposition starting temperature). Therefore, the polymer contains the monomer unit derived from N-vinylacetamide preferably 70 mol% or more, more preferably 80 mol% or more, and still more preferably 90 mol% or more. Such a polymer has an absolute molecular weight, in terms of a weight average molecular weight, of preferably 30,000 to 4,000,000, more preferably 100,000 to 3,000,000, and still more preferably 300,000 to 1,500,000. The absolute molecular weights of the poly-N-vinylacetamide and the copolymer of N-vinylacetamide are measured by the following method.

<Absolute Molecular Weight Measurement>

The binder resin was dissolved in the following eluent, which was left to stand still for 20 hours. The concentration of the binder resin in the resultant solution was 0.05% by mass.

The solution was filtered by a 0.45 um membrane filter, the molecular weight of the filtrate was measured by GPC-MALS, and a weight average molecular weight based on the absolute molecular weight was calculated.

GPC: Shodex (registered trademark) SYSTEM 21, manufactured by Showa Denko K.K.
Column: TSK gel (registered trademark) G6000PW, manufactured by Tosoh Corporation
Column Temperature: 40°C
Eluent: 0.1 mol/L of $NaH_2PO_4$ aqueous solution + 0.1 mol/L of $Na_2HPO_4$ aqueous solution
Flow Rate: 0.64 mL/min
Sample Injection Volume: 100 $\mu$L
MALS Detector: DAWN (registered trademark) DSP, manufactured by Wyatt Technology Corporation
Laser Wavelength: 633 nm
Multi-Angle Fitting Method: Berry Method

The cellulose-based resin is a linear polymer made of a six-membered ether ring formed by a covalent bond, i.e., a glycosidic bond, including an ether group. Cellulose itself does not dissolve in water, alcohol, and a mixture solvent of alcohol and water. However, some modified cellulose derivatives can dissolve in water, alcohol, and a mixture solvent of alcohol and water. The cellulose-based resin is not limited as far as it dissolves in any one of water, alcohol, and a mixture solvent of alcohol and water, but a cellulose ether can be used. Examples of cellulose ether include: alkyl cellulose (for example, C1-4 alkyl cellulose such as methyl cellulose, ethyl cellulose, etc.), hydroxyalkyl cellulose (for example, hydroxy C1-4 alkyl cellulose such as hydroxymethyl cellulose, hydroxyethyl cellulose, hydroxypropyl cellulose, etc.), hydroxyalkyl alkyl cellulose (for example, hydroxy C2-4 alkyl C1-4 alkyl cellulose such as hydroxypropyl methyl cellulose, etc.), carboxyalkyl cellulose (for example, carboxymethyl cellulose), and alkyl carboxyalkyl cellulose (for example, methyl carboxymethyl cellulose), and the like. One of these may be used by itself, or two or more of them may be used in combination. Among them, in view of the solubility to the solvent, environmental resistance (moisture resistance), using methyl cellulose, or ethyl cellulose is preferable. The cellulose-based resin has a weight average molecular weight of preferably 100,000 to 200,000. In the present disclosure, a weight average molecular weight of the cellulose-based resin is a polyethylene oxide equivalent value measured by gel permeation chromatography (hereinafter, referred to as GPC).

The transparent conducting film can be formed by coating, by printing, etc., a conducting ink containing the metal nanowires, the binder resin, and the solvent, on at least one main face of the transparent substrate, and drying and removing the solvent.

The solvent is not particularly limited as far as the solvent has a superior metal nanowire dispersibility, and the binder resin can be dissolved in the solvent, and the transparent substrate is not dissolved in the solvent. However, if the metal nanowire synthesized by the poly-ol method is used, alcohol, water or a mixture solvent of alcohol and water is preferable, in view of the compatibility to the solvent used for production (polyol). The mixture solvent of alcohol and water is more preferable because the drying speed of the binder resin can be easily controlled. As an alcohol, containing at least one kind of saturated monohydric alcohols having 1 to 3 carbon atoms (methanol, ethanol, n-propanol, and isopropanol), which are represented by $C_nH_{2n+1}OH$ (n being an integer of 1 to 3) (hereinbelow, simply referred to as "saturated monohydric alcohol having 1 to 3 carbon atoms") is preferable. Containing 40% by mass or more of the saturated monohydric alcohol having 1 to 3 carbon atoms in the alcohol in total is more preferable. Using the saturated

monohydric alcohol having 1 to 3 carbon atoms is advantageous because drying process becomes easy. Alcohols other than the saturated monohydric alcohol having 1 to 3 carbon atoms can be used together. Examples of other alcohols which can be used together with the saturated monohydric alcohol having 1 to 3 carbon atoms include ethylene glycol, propylene glycol, ethylene glycol monomethylether, ethylene glycol monoethylether, propylene glycol monomethylether, propylene glycol monoethylether, and the like. Using such alcohol together with the saturated monohydric alcohol having 1 to 3 carbon atoms is advantageous because the drying speed can be adjusted. Further, the content of the alcohol in total in the mixture solvent is preferably 5% to 90% by mass. If the content is less than 5% by mass, or more than 90% by mass, there are drawbacks that a stripe pattern (uneven coating) is generated at the time of coating.

The conducting ink can be produced by stirring and mixing the binder resin, the metal nanowire, and the solvent, using a planetary centrifugal stirrer, and the like. The content of the binder resin in the conducting ink is preferably in the range of 0.01% to 1.0% by mass. The content of the metal nanowire in the conducting ink is preferably in the range of 0.01% to 1.0% by mass. The content of the solvent in the conducting ink is preferably in the range of 98.0% to 99.98% by mass.

The conducting ink may be printed by a bar-coating method, a spin-coating method, a spray-coating method, a gravure printing method, a slit-coating method, and the like. The shape of the printed film or pattern formed by printing is not limited. However, the shape may be a shape of wire or electrode pattern formed on the transparent substrate, or a shape of a film covering the entirety or a part of the transparent substrate (solid pattern). The formed pattern is heated to dry the solvent, and thereby, becomes conductive. A preferable thickness of the transparent conducting film obtained after the drying may be different depending on the diameter of the metal nanowire used and a desired sheet resistance value, and the like, but the thickness is preferably 10 to 300 nm, and more preferably 30 to 200 nm. If the thickness of the transparent conducting film after drying is 10 nm or more, the number of intersections of the metal nanowires increases, resulting in obtaining preferable conductivity. If the thickness of the transparent conducting film after drying is 300 nm or less, light transmission becomes easy, and reflection by the metal nanowires can be suppressed, resulting in obtaining a preferable optical property. In accordance with needs, a preferable photoirradiation can be applied to the conducting pattern.

<Protection Film>

In general, a protection film which protects the transparent conducting film is preferably formed by a cured film of a curable resin composition, from a viewpoint of mechanically protecting the transparent conducting film. However, the cured film has poor moldablity, and thus, is not suitable as a protection film used for three-dimensional molding. Although depending on the finally applied object, for example, when applied to a touch panel, a transparent conducting film laminate is usually used while being adhered to another member, so as to be mechanically protected by the another member. In this case, the transparent conducting film laminate itself is not required to have a high mechanical strength. Therefore, the protection film containing a resin component and constituting the transparent conducting film laminate according to the present aspect, is mainly composed of a thermoplastic resin having a superior moldability. In other words, 94% by mass or more of the resin component constituting the protection film is derived from a thermoplastic resin. As mentioned below, the protection film is formed by coating a resin composition having a resin dissolved in a solvent, on the transparent conducting film. Therefore, the feature that 94% by mass or more of the resin component constituting the protection film is derived from a thermoplastic resin means that 94% by mass or more of the resin component contained in the resin composition is a thermoplastic resin. A resin composition having a resin component dissolved in a solvent, capable of being favorably coated on the transparent conducting film, without damaging the binder resin of the transparent conducting film and the transparent substrate, and capable of forming a film on the transparent conducting film, should be used.

An applicable resin composition is, for example, a resin composition containing ethyl cellulose or containing polyurethane having a carboxy group. For example, the resin composition containing ethyl cellulose can be ETHOCEL (registered trademark) STD-100 (ethyl cellulose, weight average molecular weight: 180,000, molecular weight distribution (Mw/Mn)=3.0 [catalog value], manufactured by Dow Chemical Company (USA)). The polyurethane containing a carboxy group has a weight average molecular weight of preferably 1,000 to 100,000, more preferably 3,000 to 85,000, still more preferably 5,000 to 70,000, and particularly preferably 10,000 to 65,000. In the present specification, the weight average molecular weight of the polyurethane containing a carboxy group is a polystyrene equivalent value measured by the GPC. When the weight average molecular weight of the polyurethane containing a carboxy group is less than 1,000, the elongation degree, flexibility, and strength of the coated film may be damaged, whereas when the weight average molecular weight exceeds 100,000, solubility of polyurethane to the solvent decreases, and even if polyurethane dissolves in the solvent, the viscosity becomes too high, resulting in increasing restrictions for use.

In the present specification, unless specifically described, measurement conditions of GPC regarding the weight-average molecular weight of the polyurethane containing a carboxy group are as follows.

Device Name: HPLC unit HSS-2000, manufactured by JASCO Corporation
Column: Shodex Colum LF-804
Mobile Phase: tetrahydrofuran
Flow Rate: 1.0 mL/min
Detector: RI-2031 Plus, manufactured by JASCO Corporation
Temperature: 40.0°C
Sample Volume: sample loop 100 μL
Sample Concentration: Approximately 0.1% by mass

The polyurethane containing a carboxy group had an acid value of preferably 10 to 140 mg-KOH/g, and more preferably 15 to 130 mg-KOH/g. When the acid value of the polyurethane containing a carboxy group is 10 mg-KOH/g or more, the protection film has a favorable solvent resistance, and the resin composition has a superior curing property when a small amount of curing component is used together. When the acid value of the polyurethane containing a carboxy group is 140 mg-KOH/g or less, solubility of the polyurethane resin to the solvent is favorable, and the viscosity of the resin composition can be easily adjusted to a desired viscosity.
In the present specification, the acid value of the polyurethane containing a carboxy group is a value measured by the following method.
Approximately 0.2 g of sample is precisely weighed by a precision balance into a 100 ml Erlenmeyer flask, and 10 ml of a mixture solvent of ethanol/toluene=1/2 (mass ratio) is provided thereto to dissolve the sample. Further, 1 to 3 drops of a phenolphthalein ethanol solution is added to the container as an indicator, which is sufficiently stirred until the sample becomes uniform. The resultant is subjected to titration with a 0.1 N potassium hydroxide-ethanol solution. When the indicator continues to be in light red for 30 seconds, it is determined that the neutralization ends.
The value obtained by using the following calculation formula is treated as an acid value of the polyurethane containing a carboxy group.

$$\text{Acid Value (mg-KOH/g)} = [B*f*5.611]/S$$

B: Use amount (ml) of 0.1 N potassium hydroxide-ethanol solution
f: Factor of 0.1 N potassium hydroxide-ethanol solution
S: Collection quantity (g) of sample

More specifically, the polyurethane containing a carboxy group is polyurethane synthesized by using (a1) a polyisocyanate compound, (a2) a polyol compound, and (a3) a dihydroxy compound containing a carboxy group, as monomers. From the viewpoint of weather resistance and light resistance, preferably, each of (a1), (a2), and (a3) does not contain a functional group with conjugate properties such as an aromatic compound. Hereinbelow, each monomer is to be explained in more detail.

(a1) Polyisocyanate Compound

For (a1) polyisocyanate compound, usually, diisocyanate which has two isocyanato groups per molecule is used. Examples of the polyisocyanate compound include: aliphatic polyisocyanate, alicyclic polyisocyanate, and the like. One of them may be used by itself, or two or more of them may be used in combination. As far as the polyurethane containing a carboxy group is not turned into a gel, a small amount of polyisocyanate having three or more isocyanato groups may also be used.
Examples of the aliphatic polyisocyanate include: 1,3-trimethylene diisocyanate, 1,4-tetramethylene diisocyanate, 1,6-hexamethylene diisocyanate, 1,9-nonamethylene diisocyanate, 1,10-decamethylene diisocyanate, 2,2,4-trimethylhexamethylene diisocyanate, 2,4,4-trimethylhexamethylene diisocyanate, lysine diisocyanate, 2,2'-diethyl ether diisocyanate, dimer acid diisocyanate, and the like.
Examples of the alicyclic polyisocyanate include: 1,4-cyclohexane diisocyanate, 1,3-bis(isocyanatomethyl)cyclohexane, 1,4-bis(isocyanatomethyl)cyclohexane, 3-isocyanatomethyl-3,5,5-trimethylcyclohexyl isocyanate (IPDI, isophorone diisocyanate), bis-(4-isocyanato cyclohexyl)methane (Hydrogenated MDI), hydrogenated (1,3- or 1,4-)xylylene diisocyanate, norbornane diisocyanate, and the like.
Here, if an alicyclic compound having 6 to 30 carbon atoms other than the carbon atoms in the isocyanato group (-NCO group) is used as (a1) polyisocyanate compound, a protective film having high reliability particularly under high temperature and high humidity, and being suitable as a member for an electronic device component can be obtained.
From the viewpoints of weather resistance and light resistance, as for (a1) polyisocyanate compound, using a compound which does not have an aromatic ring is preferable. Therefore, the content of the aromatic polyisocyanate

and the aromatic-aliphatic polyisocyanate is preferably 50 mol% or less, more preferably 30 mol% or less, and still more preferably 10 mol% or less, relative to the total amount (100 mol%) of (a1) polyisocyanate compound.

(a2) Polyol Compound

The number average molecular weight of (a2) polyol compound (with the proviso that (a2) polyol compound does not include the below-mentioned (a3) dihydroxy compound having a carboxy group) is usually 250 to 50,000, preferably 400 to 10,000, and more preferably 500 to 5,000. The molecular weight is a polystyrene equivalent value measured by the GPC under the above-mentioned conditions.

Examples of (a2) polyol compound include: polycarbonate polyol, polyether polyol, polyester polyol, polylactone polyol, polysilicone having hydroxy groups at both ends, and a polyol compound having 18 to 72 carbon atoms obtained by adding hydrogen to a C18 (carbon atom number 18) unsaturated fatty acid made from vegetable oil and a polycarboxilic acid derived from a polymer of the C18 unsaturated fatty acid, and converting the carboxylic acid into hydroxy groups. Among them, in view of the balance of the water resistance, the insulation reliability, and the adhesion to a substrate as a protective film, polycarbonate polyol is preferable as (a2) polyol compound.

The polycarbonate polyol can be obtained through reaction of diol having 3 to 18 carbon atoms with carbonate ester or phosgene, and can be represented by, for example, the following structural formula (1):

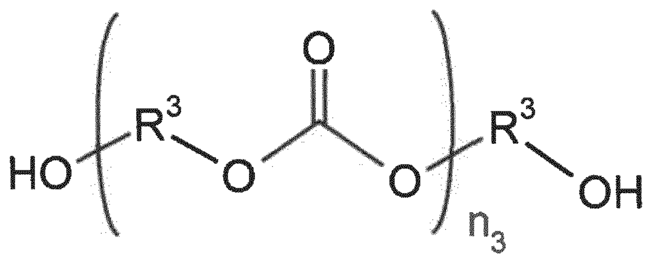

--- (1)

In Formula (1), $R^3$ represents a residue obtained by removing a hydroxy group from a corresponding diol (HO-$R^3$-OH), which is an alkylene group having 3 to 18 carbon atoms, $n_3$ represents a positive integer, which is preferably 2 to 50.

The polycarbonate polyol represented by Formula (1) can be produced by using, as a raw material, for example: 1,3-propanediol, 1,4-butanediol, 1,5-pentanediol, 1,6-hexanediol, 3-methyl-1,5-pentanediol, 1,8-octanediol, 1,3-cyclohexanedimethanol, 1,4-cyclohexanedimethanol, 1,9-nonanediol, 2-methyl-1,8-octanediol, 1,10-decamethylene glycol, and 1,2-tetradecanediol, etc.

The polycarbonate polyol may be a polycarbonate polyol (copolymerized polycarbonate polyol) having a plurality of types of alkanediyl groups in its skeleton. Using a copolymerized polycarbonate polyol is advantageous in many cases from the viewpoint of preventing crystallization of the polyurethane containing a carboxy group. Further, taking the solubility to the solvent into account, using, in combination, a polycarbonate polyol having a branched skeleton and having hydroxy groups at the ends of the branched chains, is preferable.

As far as the effect of the present disclosure is not ruined, a diol having a molecular weight of 300 or less, which is usually used as a diol component for synthesizing polyester or polycarbonate may be used as (a2) polyol compound. Specific examples of such a low molecular weight diol include: ethylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, 1,8-octanediol, 1,3-cyclohexanedimethanol, 1,4-cyclohexanedimethanol, 1,9-nonanediol, 2-methyl-1,8-octanediol, 1,10-decamethylene glycol, 1,2-tetradecanediol, 2,4-diethyl-1,5-pentanediol, butyl ethyl propanediol, diethylene glycol, triethylene glycol, and dipropylene glycol, and the like.

(a3) Dihydroxy Compound Containing Carboxy Group

Preferably, (a3) a dihydroxy compound containing a carboxy group is a carboxylic acid or an amino carboxylic acid having a molecular weight of 200 or less, having two groups selected from a hydroxy group, a hydroxyalkyl group with one carbon, and a hydroxyalkyl group with 2 carbons, because a cross linking point is controllable. Specific examples of (a3) a dihydroxy compound containing a carboxy group include: 2,2-dimethylolpropionic acid, 2,2-dimethylolbutanoic acid, N,N-bis hydroxyethyl glycine, N,N-bis hydroxyethyl alanine, and the like. Among them, in view of the solubility to the solvent, 2,2-dimethylolpropionic acid, 2,2-dimethylolbutanoic acid are particularly preferable. One type of the compounds of (a3) dihydroxy compound containing a carboxy group can be used by itself, or two or more types may be used in combination.

The polyurethane containing a carboxy group can be synthesized from the above three components ((a1), (a2), and (a3)) only. However, (a4) a monohydroxy compound and/or (a5) a monoisocyanate compound may be further reacted for synthesis. In view of the light resistance, preferably, (a4) a monohydroxy compound and/or (a5) a monoisocyanate compound is a compound which does not have an aromatic ring and a carbon-carbon double bond in a molecule.

The polyurethane containing a carboxy group can be synthesized by reacting the above-mentioned (a1) polyisocyanate compound, (a2) polyol compound, and (a3) dihydroxy compound containing a carboxy group, under the presence or absence of a known urethanization catalyst such as dibutyltin dilaurate, using an appropriate organic solvent. However, performing the reaction of the polyurethane containing a carboxy group without a catalyst is preferable because there would be no need to concern about the mixing of tin, etc., in the final product.

The organic solvent is not particularly limited as far as the reactivity with the isocyanate compound is low, but a preferable solvent is a solvent free from a basic functional group such as amine, etc., and having a boiling point of 50°C or higher, preferably 80°C or higher, and more preferably 100°C or higher. Examples of such a solvent include: toluene, xylylene, ethylbenzene, nitrobenzene, cyclohexane, isophorone, diethylene glycol dimethyl ether, ethylene glycol diethyl ether, ethylene glycol monomethyl ether acetate, propylene glycol monomethyl ether acetate, propylene glycol monoethyl ether acetate, dipropylene glycol monomethyl ether acetate, diethylene glycol monoethyl ether acetate, methyl methoxypropionate, ethyl methoxypropionate, methyl ethoxypropionate, ethyl ethoxypropionate, ethyl acetate, n-butyl acetate, isoamyl acetate, ethyl lactate, acetone, methyl ethyl ketone, cyclohexanone, N,N-dimethylformamide, N,N-dimethylacetamide, N-methylpyrrolidone, γ-butyrolactone, dimethyl sulfoxide, and the like.

Taking into account that it is not preferable to use an organic solvent in which the polyurethane to be generated does not dissolve well, and that the polyurethane is used as a raw material for an ink for the protection film, in the usage as an electronic material, preferable organic solvents include: propylene glycol monomethyl ether acetate, propylene glycol monoethyl ether acetate, dipropylene glycol monomethyl ether acetate, diethylene glycol monoethyl ether acetate, γ-butyrolactone, etc., and a combination of these.

The addition sequence of the raw materials is not limited, but usually, first, (a2) polyol compound and (a3) dihydroxy compound having a carboxy group are provided in a reaction container, and dissolved or dispersed in the solvent, and thereafter, (a1) polyisocyanate compound is added by dropping at 20 to 150°C, and more preferably at 60 to 120°C, which is then reacted at 30 to 160°C, and preferably at 50 to 130°C.

The molar ratio of the added raw materials is adjusted in accordance with the molecular weight and the acid value of the objected polyurethane.

Specifically, the molar ratio of the provided materials is that isocyanato group of (a1) polyisocyanate compound : (hydroxy group of (a2) polyol compound + hydroxy group of (a3) dihydroxy compound having a carboxy group) is preferably 0.5 to 1.5:1, more preferably 0.8 to 1.2:1, and still more preferably 0.95 to 1.05:1.

Further, the molar ratio of hydroxy group of (a2) polyol compound: hydroxy group of (a3) dihydroxy compound having a carboxy group is preferably 1:0.1 to 30, and more preferably 1:0.3 to 10.

As mentioned above, 94% by mass or more of the resin component constituting the protection film is derived from a thermoplastic resin. This may be that 6% by mass or less of the resin component constituting the protection film is derived from a curable resin (compound). When the amount of the curable resin (compound) in the resin component of the resin composition is 6% by mass or less, moldability of the three-dimensional molding does not particularly decrease, and a function as a protection film can be increased. An example of a preferable curable resin (compound) which can be used together with a thermoplastic resin is an epoxy resin (compound) having two or more epoxy groups within a molecule.

When the protection film is formed, a thermoplastic resin and a thermocurable resin may react with each other. For example, when polyurethane containing a carboxy group is used as a thermoplastic resin, and an epoxy resin is used as a thermocurable resin, a carboxy group of polyurethane may react with an epoxy group of the epoxy resin, and a polyurethane-epoxy resin composite may be formed. In the present specification, the expression "94% by mass or more of the resin component constituting the protection film is derived from a thermoplastic resin" refers to the feature that the thermoplastic resin used for forming the protection film, for example, a polyurethane containing a carboxy group corresponds to 94% by mass or more of the resin component of the protection film, and the feature that the thermocurable resin used for forming the protection film, for example, an epoxy resin having two or more epoxy groups in a molecule corresponds to 6% by mass or less of the resin component of the protection film. When the resin component forming the protection film is derived from the polyurethane containing a carboxy group and the epoxy resin having two or more epoxy groups in a molecule, the content the epoxy resin having two or more epoxy groups in a molecule is more than 0% by mass and 6% by mass or less in the resin component.

Examples of the epoxy resin (compound) having two or more epoxy groups in one molecule include: bisphenol-A type epoxy resin, hydrogenated bisphenol-A type epoxy resin, bisphenol-F type epoxy resin, novolak type epoxy resin, phenol novolak type epoxy resin, cresol novolak type epoxy resin, N-glycidyl type epoxy resin, bisphenol A novolak type epoxy resin, chelate type epoxy resin, glyoxal type epoxy resin, amino group-containing epoxy resin, rubber-modified epoxy resin, dicyclopentadiene phenolic type epoxy resin, silicone-modified epoxy resin, ε-caprolactone-modified epoxy

resin, aliphatic-type epoxy resin containing a glycidyl group, alicyclic epoxy resin containing a glycidyl group, etc.

An epoxy compound having three or more epoxy groups in one molecule can be preferably used. Examples of such an epoxy compound include: EHPE (registered trademark) 3150 (manufactured by Daicel Corporation), jER (registered trademark) 604 (manufactured by Mitsubishi Chemical Corporation), EPICLON (registered trademark) EXA-4700 (manufactured by DIC Corporation), EPICLON (registered trademark) HP-7200 (manufactured by DIC Corporation), pentaerythritol tetraglycidyl ether, pentaerythritol triglycidyl ether, TEPIC (registered trademark) -S (manufactured by Nissan Chemical Corporation), and the like.

The mixing ratio of the epoxy resin (compound) and the polyurethane containing a carboxy group preferably is preferably more than 0 and 0.02 or less, in terms of molar ratio (Ep/COOH) of the epoxy groups (Ep) of the epoxy compound relative to the carboxy groups (COOH) of the polyurethane containing a carboxy group.

When the epoxy resin (compound) and the polyurethane containing a carboxy group are used together, a curing accelerator can be further mixed to the resin composition. Specific examples of the curing accelerator include: a phosphine-based compound such as triphenylphosphine, tributylphosphine (manufactured by Hokko Chemical Industry Co., Ltd.), Curezol (registered trademark) (imidazole-based epoxy resin curing agent: manufactured by Shikoku Chemicals Corporation), 2-phenyl-4-methyl-5-hydroxy methyl imidazole, U-CAT (registered trademark) SA series (DBU salt: manufactured by San-Apro Ltd.), Irgacure (registered trademark) 184, and the like. The used amount of the curing accelerator relative to 100 parts by mass of the epoxy resin (compound) is preferably 20 to 80 parts by mass, more preferably 30 to 70 parts by mass, and still more preferably 40 to 60 parts by mass. The curing accelerator is contained in the resin component other than the thermoplastic resin ではない resin component.

Further, a curing aid may be used together. The curing aid may be a polyfunctional thiol compound, an oxetane compound, and the like. Examples of the polyfunctional thiol compound include: pentaerythritol tetrakis(3-mercaptopropionate), tris-[(3-mercaptopropionyloxy)-ethyl] -isocyanurate, trimethylolpropane tris(3-mercaptopropionate), Karenz (registered trademark) MT series (manufactured by Showa Denko K. K.), and the like. Examples of the oxetane compound include: ARON OXETANE (registered trademark) series (manufactured by Toagosei Co., Ltd.), ETERNACOLL (registered trademark) OXBP or OXMA (manufactured by Ube Industries Ltd.), and the like. The used amount of the curing aid is preferably 0.1 to 10 parts by mass, and more preferably 0.5 to 6 parts by mass, relative to 100 parts by mass of the epoxy resin (compound), because the effect of addition can be obtained, and a favorable handling property can be maintained while an excessive increase of the curing speed is avoided. The curing aid is also contained in the resin component other than the thermoplastic resin.

The resin composition contains a solvent in the amount of preferably 95.0% by mass or more and 99.9% by mass or less, more preferably 96% by mass or more and 99.7% by mass or less, and still more preferably 97% by mass or more and 99.5% by mass or less. A solvent which does not damage the transparent conducting film and the transparent substrate can be used. The solvent used for synthesizing the polyurethane containing a carboxy group can be used as it is. Further, other solvent may be used in order to adjust the solubility of the binder resin or printability. When other solvent is used, the solvent used for synthesizing the polyurethane containing a carboxy group may be distilled away before or after a new solvent is added, to replace the solvent. Taking into account the cumbersomeness of operations and the energy cost, using at least a part of the solvent used for synthesizing the polyurethane containing a carboxy group as it is, is preferable. Taking the stability of the resin composition into account, the solvent has a boiling point of preferably 80°C to 300°C, and more preferably 80°C to 250°C. If the boiling point is lower than 80°C, drying easily proceeds during the printing, which causes unevenness. If the boiling point is higher than 300°C, heat treatment at a high temperature for a long time is required for drying and curing, which is not suitable for industrial production.

Examples of the solvent include: a solvent used for synthesizing polyurethane such as propylene glycol monomethyl ether acetate (boiling point 146°C), γ-butyrolactone (boiling point 204°C), diethylene glycol monoethyl ether acetate (boiling point 218°C), tripropylene glycol dimethyl ether (boiling point 243°C), etc.; an ether-based solvent such as propylene glycol dimethyl ether (boiling point 97°C), diethylene glycol dimethyl ether (boiling point 162°C), etc.; a solvent having a hydroxy group such as isopropyl alcohol (boiling point 82°C), t-butyl alcohol (boiling point 82°C), 1-hexanol (boiling point 157°C), propylene glycol monomethyl ether (boiling point 120°C), diethylene glycol monomethyl ether (boiling point 194°C), diethylene glycol monoethyl ether (boiling point 196°C), diethylene glycol monobutyl ether (boiling point 230°C), triethylene glycol (boiling point 276°C), ethyl lactate (boiling point 154°C), etc.; and a ketone-based solvent such as methyl ethyl ketone (boiling point 80°C); and an ester-based solvent such as ethyl acetate (boiling point 77°C). One of these solvents may be used by itself, or a mixture of two or more types of them may be used. When two or more types of solvents are mixed, using a solvent having a hydroxy group and having a boiling point exceeding 100°C in view of the solubility of the used polyurethane, epoxy resin., etc., and in order to prevent aggregation or precipitation, or using a solvent having a boiling point of 100°C or lower in view of the drying property of the ink, in addition to the solvent used for synthesizing the polyurethane containing a carboxy group, is preferable. A solvent which may damage the transparent conducting film or the transparent substrate when the solvent is used solely, can be used if a mixture solvent of the relevant solvent with other solvent becomes a composition which does not damage the transparent

conducting film or the transparent substrate.

The resin composition can be produced by mixing, in accordance with needs, the epoxy compound, the curing accelerator and/or the curing aid, to the polyurethane containing a carboxy group, further mixing the solvent so that the content of the solvent in the resin composition becomes 95.0% by mass or more and 99.9% by mass or less, and stirring the mixture until these components in the mixture become uniform.

The solid content concentration in the resin composition may differ depending on the desired film thickness or printing method, but is preferably 0.1 to 10% by mass, and more preferably 0.5% by mass to 5% by mass by mass. If the solid content is within the range of 0.1 to 10% by mass, the film thickness does not become too large, the electrical contact with the transparent conducting film can be maintained, and a sufficient weather resistance and light resistance can be provided to the protection film.

The above mentioned resin composition is used for forming a protection film, by coating the resin composition on the transparent conducting film using a printing method such as a bar-coating printing, gravure printing, inkjet printing, slit coating, and the like, and drying and removing the solvent. The protection film has a thickness of generally more than 100 nm and 1 μm or less. The protection film has a thickness of preferably more than 100 nm and 500 nm or less, more preferably more than 100 nm and 200 nm or less, still more preferably more than 100 nm and 150 nm or less, and particularly preferably more than 100 nm and 120 nm or less. If the thickness of the protection film exceeds 1 μm, obtaining conduction between wires and the transparent conducting film, in the post process, becomes difficult.

The transparent conducting film laminate obtained by sequentially forming the transparent conducting film (for example, a silver nanowire layer) and the protection film on the transparent substrate, as mentioned above has a superior three-dimensional moldability.

A method for three-dimensional molding of the transparent conducting film laminate can be a various known method such as vacuum molding, blow molding, free blow molding, pressure molding, vacuum pressure molding, hot-press molding, and the like. Regardless of the method used, stress is applied to the transparent conducting film laminate during the three-dimensional molding to cause distortion. With this distortion, the transparent conducting film laminate is elongated. In case of a transparent conducting film laminate having a low three-dimensional moldability, in general, a transparent conducting film constituting the transparent conducting film laminate is broken at a low stress (low elongation rate), or the sheet resistance value remarkably increases. On the other hand, in case of a transparent conducting film laminate having a superior three-dimensional moldability, a transparent conducting film is not broken until a high stress (high elongation rate), or increase of the sheet resistance value is small. Accordingly, by performing a tensile test, and measuring the change of the sheet resistance value, the three-dimensional moldability of the transparent conducting film laminate can be evaluated. As in the below-mentioned examples, retarding the transparent conducting film laminate according to the present aspect, when a resistance value ($R_0$) and a resistance value (R) respectively represent resistance values before and after the 15% distortion is applied, the ratio ($R/R_0$) is 25 or less, which is preferable. It is believed that this is because, by using a protection film in which 94% by mass or more of the resin component is a thermoplastic resin, even if distortion is applied, cracks are rarely generated in the protection film, and a crack in the protection film can be prevented from transmitting to the transparent conducting film to damage the conductivity thereof. From the viewpoint of the three-dimensional moldability, the protection film preferably has no curing component (epoxy compound, curing accelerator, etc.).

The transparent conducting film laminates according to other aspects include a laminate for molding (transparent conducting film laminate for molding), in which a substrate (front plate) containing a thermoplastic resin is further stacked. For the purpose of protection, decoration, shape-holding, etc., of the transparent conducting film laminate, the substrate (front plate) containing a thermoplastic resin is stacked on the above-mentioned transparent conducting film laminate. The kind of the thermoplastic resin constituting the substrate is not limited as far as it is transparent, but various resins such as polycarbonate (PC) resin, acrylic resin, polyethylene terephthalate (PET), triacetyl cellulose (TAC), polyethylene naphthalate (PEN), thermoplastic polyimide (PI), cycloolefin polymer (COP), cycloolefin copolymer (COC), polyethersulfone, cellophane, etc., are used. Among these, the thermoplastic resin of the substrate preferably contains at least a polycarbonate resin. The substrate (front plate) has a thickness of preferably in the range of 0.5 to 3.0 mm, more preferably 0.6 to 2.5 mm, and still more preferably 0.8 to 2.0 mm. When the thickness is within the range or 0.5 to 3.0 mm, forming is possible with no problem, and the shape after the forming can be maintained.

The kind of the polycarbonate resin contained in the substrate is not limited as far as the molecular main-chain includes -[O-R-OCO]- unit having a carbonate ester bond (R including an aliphatic group, an aromatic group, or both of an aliphatic group and an aromatic group, and further having a straight-chain structure or a branched structure), but is preferably a polycarbonate having a bisphenol skeleton, etc., and particularly preferably a polycarbonate having a bisphenol-A skeleton or a bisphenol-C skeleton. For the polycarbonate resin, a mixture of bisphenol-A and bisphenol-C, or a copolymer thereof may be used. By using a bisphenol-C-based polycarbonate resin, for example, a polycarbonate resin derived from bisphenol-C only, a polycarbonate resin derived from a mixture of bisphenol-C and bisphenol-A, or a polycarbonate resin derived from a copolymer thereof, the hardness of the substrate can be increased. Further, the polycarbonate resin has a viscosity average molecular weight of preferably 15,000 to 40,000, more preferably 20,000

to 35,000, and still more preferably 22,500 to 25,000. Using polycarbonate same as the one used for the transparent substrate constituting the above-mentioned transparent conducting film laminate is preferable.

Further, the acrylic resin contained in the substrate is not particularly limited, but examples thereof include: various meth(acrylic) ester homopolymer (PMMA, etc.), typically, methyl methacrylate (MMA), a copolymer of MMA with other one or more monomer, and further, a mixture of a plurality of kinds of these resins. Among them, (meth)acrylate having a cyclic alkyl structure which is favorable in terms of the low birefringence, low moisture absorbency, and heat resistance, is preferable. Examples of the above acrylic resin include: ACRYPET (registered trademark, manufactured by Mitsubishi Chemical Corporation), DELPET (registered trademark, manufactured by Asahi Kasei Corporation), PARAPET (registered trademark, manufactured by Kuraray Co., Ltd.), but the acrylic resin is not limited to these examples.

As a substrate, a two-layered product of the polycarbonate resin and the above-mentioned acrylic resin can be used. By using the two-layered product of the polycarbonate resin and the above-mentioned acrylic resin, the thermosmoldability of the substrate can be maintained while the surface hardness is increased.

Also, the substrate may contain an additive as a component other than the thermoplastic resin. Examples of the additive include: a heat stabilizer, an antioxidant, a flame retardant, a flame retardant aid, an ultraviolet absorber, a release agent, a colorant, and the like. One of them can be used solely, or two or mor kinds of them can be used in combination. Further, an antistatic agent, a fluorescent whitener, an anti-fogging agent, a flow modifier, a plasticizer, a dispersant, an antimicrobial agent, and the like, can be added to the substrate.

The substrate contains the thermoplastic resin in an amount of preferably 80% by mass or more, more preferably 90% by mass or more, and still more preferably 95% by mass or more. Further, in the thermoplastic resin of the substrate, a polycarbonate resin is contained in an amount of preferably 80% by mass or more, more preferably 90% by mass or more, and still more preferably 95% by mass or more.

A substrate having a thermoplastic resin which is further hardcoated, can be also used. The hardcoated substrate can be obtained by a method that a hardcoat composition containing a photopolymerizable compound is coated on the substrate, dried, and then, cured by ultraviolet rays, or a method that a thermocurable composition containing a thermocurable compound is coated on the substrate, dried, and then, cured by heating. The method that a hardcoat composition containing a photopolymerizable compound is coated on the substrate, dried, and cured by ultraviolet rays, is preferable. Preferably, the hardcoat is provided on a surface of the substrate opposite to the surface where the below-mentioned adhesive layer is provided.

The photopolymerizable compound can be any compound that has a photopolymerizable functional group, but the one having a urethane (meth)acrylate component is preferable. The urethane (meth)acrylate contains a polymer of a resin material contains urethane (meth)acrylate derived from polyol, isocyanate, and (meth)acrylate and (meth)acrylate. Namely, a mixture of urethane (meth)acrylate obtained by dehydration condensation reaction of three components, i.e., polyol, isocyanate, and (meth)acrylate, with (meth)acrylate, is preferable.

An additive can be added to the hardcoat composition to improve the physical property. Examples of the additive include: a fluorine-based additive or a silicone-based additive capable of adding an antifouling property and a slipping property, an inorganic particle component capable of improving abrasion resistance, and the like.

A substrate having providing a processing layer other than the hardcoat layer to the thermoplastic resin can be used, examples of the processing layer being an antiglare layer, antifouling/finger mark processing layer, etc.

The transparent conducting film laminate and the substrate are stacked with an adhesive layer therebetween. For the adhesive layer, anything can be used as far as it can bond the transparent conducting film laminate and the substrate. The adhesive layer can be easily obtained by coating an adhesive agent on the surface of the substrate, and drying the same. A commercially available optical clear adhesive sheet (OCA) or optical clear adhesive resin (OCR) can be used for adhesion.

OCA is used for adhering objects to be adhered under an atmospheric pressure or vacuum, and an acryl-based material, a silicone-based material, etc., are used therefor. Examples thereof include: LUCIACS (registered trademark, manufactured by Nitto Denko Corporation), CLEARFIT (registered trademark, by Mitsubishi Chemical Corporation), HSV (manufactured by Sekisui Chemical Co., Ltd.), and the like.

OCR is an adhesive resin for adhering objects to be adhered, and those of acryl-based material, silicone-based material, are commercially available.

## EXAMPLES

Hereinbelow, specific examples of the present disclosure will be specifically explained. The examples are described below for the purpose of easy understanding of the present disclosure, and the present disclosure is not limited to these examples.

<Preparation of Silver Nanowire>

Silver Nanowire 1

Poly-N-vinylpyrrolidone K-90 (manufactured by Nippon Shokubai Co., Ltd.) (0.98g), AgNOs (1.04g), and $FeCl_3$ (0.8 mg) were dissolved in ethylene glycol (250 ml), and subjected to thermal reaction at 150°C for one hour. The obtained silver nanowire coarse dispersion liquid was dispersed in 2000 ml of water/ethanol=20/80 [mass ratio] mixture solvent, which was poured into a desktop small tester (using ceramic membrane filter Cefilt, membrane area: 0.24 $m^2$, pore size: 2.0 μm, size Φ: 30 mmPoor250 mm, filter differential pressure: 0.01 MPa, manufactured by NGK Insulators, Ltd.), and was subjected to cross-flow filtration at a circulation flow rate of 12 L/min and a dispersion liquid temperature of 25°C, to remove impurities. Thereby, a silver nanowire 1 (average diameter: 26 nm, average length: 20 μm) was obtained. The average diameter of the obtained silver nanowires 1 was obtained by measuring sizes (diameters) of arbitrarily selected 100 silver nanowires using Field Emission Scanning Electron Microscope JSM-7000F (manufactured by JEOL Ltd.), and calculating the arithmetic average value of the measurement results. Further, the average length of the obtained silver nanowires 1 was obtained by measuring sizes (lengths) of arbitrarily selected 100 silver nanowires using the Shape Measurement Laser Microscope VK-X200 (manufactured by Keyence Corporation), and calculating the arithmetic average value of the measurement results. For the ethanol, ethylene glycol, $AgNO_3$, and $FeCl_3$, those manufactured by FUJIFILM Wako Pure Chemical Corporation were used.

<Preparation of Conducting Ink (Silver Nanowire Ink)>

Preparation Example 1 (Silver Nanowire Ink 1)

11 g of dispersion liquid of silver nanowires 1, synthesized by the above polyol method, in the water/ethanol mixture solvent (silver nanowire concentration: 0.62% by mass, water/ethanol=20/80 [mass ratio]), 1.1 g of water, 6.0 g of methanol (manufactured by FUJIFILM Wako Pure Chemical Corporation), 7.2 g of ethanol (manufactured by FUJIFILM Wako Pure Chemical Corporation), 12.8 g of propyleneglycol monomethyl ether (PGME, manufactured by FUJIFILM Wako Pure Chemical Corporation), 1.2 g of propylene glycol (PG, manufactured by AGC Inc.), and 0.7 g of PNVA (registered trademark) aqueous solution (solid content concentration: 10% by mass, absolute molecular weight: 900,000, manufactured by Showa Denko K. K.) were mixed and stirred by Mix Rotor VMR-5R (manufactured by AS ONE Corporation) for 1 hour, at a room temperature and under an air atmosphere (rotation speed: 100 rpm), to thereby produce 40 g of silver nanowire ink 1.

Preparation Example 2 (silver nanowire ink 2)

Except that the 0.7 g of PNVA (registered trademark) aqueous solution (solid content concentration: 10% by mass, absolute molecular weight: 900,000, manufactured by Showa Denko K. K.) was changed to 0.7 g of solution (solid concentration 10% by mass, ethanol solution) prepared by using ETHOCEL (registered trademark) STD-100cps (ethyl cellulose, weight average molecular weight: 180,000, molecular weight distribution (Mw/Mn)=3.0 [catalog value], manufactured by Dow Chemical Company (USA)), other processes were the same as those of Preparation Example 1, and a silver nanowire ink 2 was obtained. For the ethanol, the one manufactured by FUJIFILM Wako Pure Chemical Corporation was used.

<Printing of Silver Nanowire Ink Coated Film>

Using a barcoat printer (AFA-Standard, manufactured by Cotec K.K.), the silver nanowire ink 1 prepared by the above Preparation Example 1 was coated to have a wet film thickness of 20 μm, as a A4-size solid pattern so that a transparent conducting film (silver nanowire ink coated film) is printed on a main face of a PC film (lupilon (registered trademark) FS-2000H, glass transition temperature: 130°C (catalog value), 100-μm-thick, manufactured by Mitsubishi Gas Chemical Company, Inc.). Using a constant temperature oven ETAC HS350, manufactured by Kusumoto Chemicals Ltd., the solvent was dried at 80°C, for one minute. Thereafter, a sheet resistance of the obtained transparent conducting film was measured. The sheet resistance of the film is an arithmetic average value of measurement results at 30 points obtained by dividing the transparent conducting film (solid pattern) into areas each having a 3 cm*3 cm square, and measuring a sheet resistance at approximately the center of each square. All of the transparent conducting films using the silver nanowire ink 1 had a sheet resistance of 50 Ω/□, respectively. The sheet resistances were measured by using a non-contact resistance measurement instrument (EC-80P, manufactured by Napson Corporation). Further, the thickness of the transparent conducting film was measured by a film thickness measurement system F20-UV (manufactured by Filmetrics Corporation), based on optical interferometry, and the measurement result was 80 nm. Measurement was

performed at three different points, and an average value thereof was used as a thickness. For analysis, 450 nm to 800 nm spectrum was used. According to this measurement system, the film thickness (Tc) of the silver nanowire layer formed on the transparent substrate can be directly measured.

<Preparation of Protection Film Ink (Resin Composition)>

Synthesis Example of Polyurethane Containing Carboxy Group Synthesis Example 1

16.7 g of C-1015N (polycarbonate diol, molar ratio of raw material diols: 1,9-nonanediol:2-methyl-1,8-octanediol = 15:85, molecular weight: 964, manufactured by Kuraray Co., Ltd.) as a polyol compound, 10.8 g of 2,2-dimethylol butanoic acid (manufactured by Huzhou Changsheng Chemical Co., Ltd.) as a dihydroxy compound containing a carboxy group, and 62.6 g of propylene glycol monomethylether acetate (manufactured by FUJIFILM Wako Pure Chemical Corporation) as a solvent were provided in a 2L three-neck flask having a stirrer, a thermometer, and a condenser (reflux condenser), and the 2,2-dimethylol butanoic acid was dissolved at 90°C.

The temperature of the reaction liquid was lowered to 70°C, and 23.5 g of Desmodur (registered trademark)-W (bis-(4-isocyanatocyclohexyl)methane), manufactured by Sumika Covestro Urethane Co., Ltd.) as polyisocyanate was dropped thereto for 30 minutes by a dropping funnel. After the dropping was complete, the temperature was raised to 100°C, and the reaction was performed at 100°C for 15 hours. After the confirmation by IR that almost all of the isocyanate disappeared, 0.5 g of isobutanol was added, which was further reacted at 100°C for 6 hours. The obtained carboxy group-containing polyurethane had a weight average molecular weight, obtained by GPC, of 33500, and a resin solution thereof had an acid value of 39.4 mgKOH/g.

Protection Film Ink 1

7.1 g of the polyurethane containing a carboxy group solution (solid concentration: 42.4% by mass) obtained by the above Synthesis Example 1, and 92.9 g of a mixture of 1-hexanol (C6OH) and ethyl acetate (EA) (C6OH:EA=50:50 (mass ratio)) as a solvent, were provided, which were stirred by using a planetary centrifugal vacuum mixer, AWATORI RENTARO (registered trademark) ARV-310 manufactured by Thinky Corporation, at 1200 rpm, for 20 minutes so that the mixture becomes uniform, and thus, protection film ink 1 was obtained. The non-volatile content (solid content) concentration (the amount of the polyurethane containing a carboxy group) of the protection film ink 1, calculated from the masses of before and after the solvent drying, was 3% by mass.

Protection Film Ink 2

Except that the solution of polyurethane containing a carboxy group mixed in the protection film ink 1 was changed to 30.0 g of ETHOCEL (registered trademark) STD-100cps (ethyl cellulose, manufactured by Dow Chemical Company (USA)) solution (solid concentration: 10% by mass, ethanol solution), and that 70.0 g of a mixture of 1-hexanol (C6OH) and ethyl acetate (EA) (C60H:EA=50:50 (mass ratio)) as a solvent was added, other processes were the same as those of protection film ink 1, and a protection film ink 2 was obtained. The non-volatile content (solid content) concentration (the amount of ETHOCEL (registered trademark)) of the protection film ink 2, calculated from the masses of before and after the solvent drying, was 3% by mass.

Protection Film Ink 3

1.8 g of a solution of polyurethane containing a carboxy group (solid concentration: 42.4% by mass) obtained by Synthesis Example 1, 0.1 g of pentaerythritol tetraglycidyl ether (manufactured by Showa Denko K. K.) as an epoxy compound 1, 0.05 g of U-CAT5003 (quaternary phosphonium bromide) (manufactured by San-Apro Ltd.) as a curing accelerator, and 28.0 g of a mixture of 1-hexanol (C6OH) and ethyl acetate (EA) (C6OH:EA=50:50 (mass ratio)) as a solvent were provided, which were stirred by using a planetary centrifugal vacuum mixer, AWATORI RENTARO (registered trademark) ARV-310 manufactured by Thinky Corporation, at 1200 rpm, for 20 minutes so that the mixture becomes uniform, and thus, protection film ink 3 was obtained. The non-volatile content (solid content) concentration (the amount of the polyurethane containing a carboxy group, the epoxy compound, and the curing accelerator in total) of the protection film ink 3, calculated from the masses of before and after the solvent drying, was 3% by mass. In the protection film ink 3, regarding the carboxy group (COOH) of the polyurethane containing a carboxy group, and the epoxy group (Ep) of the epoxy resin, the molar ratio (Ep/COOH) was 1.0.

Protection Film Ink 4

Except that the epoxy compound 1 mixed in the protection film ink 3 was changed to 0.2 g of an epoxy compound 2 (EPICLON (registered trademark) 850 (bisphenol-A type liquid epoxy resin, manufactured by DIC Corporation)), and that the amount of the curing accelerator was changed to 0.1 g, other processes were the same as those of protection film ink 3, and a protection film ink 4 was obtained. The non-volatile content (solid content) concentration (the amount of the polyurethane containing a carboxy group, the epoxy compound, and the curing accelerator in total) of the protection film ink 4, calculated from the masses of before and after the solvent drying, was 3% by mass. In the protection film ink 4, regarding the carboxy group (COOH) of the polyurethane containing a carboxy group, and the epoxy group (Ep) of the epoxy resin, the molar ratio (Ep/COOH) was 1.0.

Protection Film Ink 5

Except that the amount of the epoxy compound 1 mixed in the protection film ink 3 was changed to 0.07 g, other processes were the same as those of protection film ink 3, and a protection film ink 5 was obtained. In the protection film ink 5, regarding the carboxy group (COOH) of the polyurethane containing a carboxy group, and the epoxy group (Ep) of the epoxy resin, the molar ratio (Ep/COOH) was 0.7. The non-volatile content (solid content) concentration (the amount of the polyurethane containing a carboxy group, the epoxy compound, and the curing accelerator in total) of the protection film ink 5, calculated from the masses of before and after the solvent drying, was 3% by mass.

Protection Film Ink 6

Except that the amount of the epoxy compound 1 mixed in the protection film ink 3 was changed to 0.2 g, other processes were the same as those of protection film ink 3, and a protection film ink 6 was obtained. In the protection film ink 6, regarding the carboxy group (COOH) of the polyurethane containing a carboxy group, and the epoxy group (Ep) of the epoxy resin, the molar ratio (Ep/COOH) was 2.0. The non-volatile content (solid content) concentration (the amount of the polyurethane containing a carboxy group, the epoxy compound, and the curing accelerator in total) of the protection film ink 6, calculated from the masses of before and after the solvent drying, was 3% by mass.

Protection Film Ink 7

Except that the amount of the epoxy compound 2 mixed in the protection film ink 4 was changed to 0.13 g, other processes were the same as those of protection film ink 4, and a protection film ink 7 was obtained. In the protection film ink 7, regarding the carboxy group (COOH) of the polyurethane containing a carboxy group, and the epoxy group (Ep) of the epoxy resin, the molar ratio (Ep/COOH) was 0.7. The non-volatile content (solid content) concentration (the amount of the polyurethane containing a carboxy group, the epoxy compound, and the curing accelerator in total) of the protection film ink 7, calculated from the masses of before and after the solvent drying, was 3% by mass.

Protection Film Ink 8

Except that the amount of the epoxy compound 1 mixed in the protection film ink 3 was changed to 0.05 g, other processes were the same as those of protection film ink 3, and a protection film ink 8 was obtained. In the protection film ink 8, regarding the carboxy group (COOH) of the polyurethane containing a carboxy group, and the epoxy group (Ep) of the epoxy resin, the molar ratio (Ep/COOH) was 0.5. The non-volatile content (solid content) concentration (the amount of the polyurethane containing a carboxy group, the epoxy compound, and the curing accelerator in total) of the protection film ink 8, calculated from the masses of before and after the solvent drying, was 3% by mass.

Protection Film Ink 9

Except that the amount of the epoxy compound 1 mixed in the protection film ink 3 was changed to 0.01 g, other processes were the same as those of protection film ink 3, and a protection film ink 9 was obtained. In the protection film ink 9, regarding the carboxy group (COOH) of the polyurethane containing a carboxy group, and the epoxy group (Ep) of the epoxy resin, the molar ratio (Ep/COOH) was 0.1. The non-volatile content (solid content) concentration (the amount of the polyurethane containing a carboxy group, the epoxy compound, and the curing accelerator in total) of the protection film ink 9, calculated from the masses of before and after the solvent drying, was 3% by mass.

Protection Film Ink 10

Except that the amount of the epoxy compound 1 mixed in the protection film ink 3 was changed to 0.002 g, other processes were the same as those of protection film ink 3, and a protection film ink 10 was obtained. In the protection film ink 10, regarding the carboxy group (COOH) of the polyurethane containing a carboxy group, and the epoxy group (Ep) of the epoxy resin, the molar ratio (Ep/COOH) was 0.02. The non-volatile content (solid content) concentration (the amount of the polyurethane containing a carboxy group, the epoxy compound, and the curing accelerator in total) of the protection film ink 10, calculated from the masses of before and after the solvent drying, was 3% by mass.

<Printing of Protection Film>

Example 1

Using the silver nanowire ink 1 obtained by Preparation Example 1, a transparent conducting film (silver nanowire ink coated film) was printed on a main face of a PC film, and the protection film ink 1 was coated on a main face of the transparent conducting film using the above-mentioned barcoat printer to have a wet film thickness of approximately 7 um, so that a transparent conducting film with a protection film (silver nanowire ink coated film with a protection film) was printed as a A4-size solid pattern. Using the above-mentioned constant temperature oven, the solvent was dried at 80°C for 1 minute, to thereby form a transparent conducting film laminate according to Example 1. The sheet resistance of the obtained transparent conducting film laminate was measured. The sheet resistance of the film is an arithmetic average value of measurement results at 30 points obtained by dividing the transparent conducting film (solid pattern) into areas each having a 3 cm*3 cm square, and measuring a sheet resistance at approximately the center of each square. All of the transparent conducting films using the protection film ink 1 had a sheet resistance of 50 Ω/□, respectively. The sheet resistances were measured by using the above-mentioned non-contact resistance measurement instrument. Further, same as the film thickness of the silver nanowire layer, the thickness of the protection film was measured by the above-mentioned film thickness measurement system F20-UV (manufactured by Filmetrics Corporation), based on optical interferometry, and the measurement result was 90 nm. Measurement was performed at three different points, and an average value thereof was used as a thickness. For analysis, 450 nm to 800 nm spectrum was used. According to this measurement system, the total film thickness ($T_c$+$T_p$) can be directly measured, the film thickness ($T_c$) being a film thickness of the silver nanowire layer formed on the transparent substrate, and the film thickness ($T_p$) being a film thickness of the protection film formed on the silver nanowire layer. Thus, by subtracting the previously measured film thickness ($T_c$) of the silver nanowire layer from this measurement value, the film thickness ($T_p$) of the protection film can be obtained. Table 1 shows the measurement results.

Example 2, Example 3, and Comparative Examples 1 to 8

Same as Example 1, silver nanowire ink coated films and protection films are formed in accordance with the combinations shown in Table 1, to form transparent conducting film laminates, respectively. The transparent conducting film laminate according to Comparative Example 8 is a two-layered film comprising a transparent substrate provided with a silver nanowire ink coated film only, without forming a protection film, for which it was previously confirmed that even if a 15% distortion was applied, wires can be formed without any drawbacks such as disconnection, etc.

Table 1

| | Silver Nanowire Ink | Binder Resin | Protection Film Ink |
|---|---|---|---|
| Example 1 | 1 | PNVA | 1 |
| Example 2 | 1 | PNVA | 2 |
| Comparative Example 1 | 1 | PNVA | 3 |
| Comparative Example 2 | 1 | PNVA | 4 |
| Comparative Example 3 | 1 | PNVA | 5 |
| Comparative Example 4 | 1 | PNVA | 6 |
| Comparative Example 5 | 1 | PNVA | 7 |
| Comparative Example 6 | 1 | PNVA | 8 |

(continued)

| | Silver Nanowire Ink | Binder Resin | Protection Film Ink |
|---|---|---|---|
| Comparative Example 7 | 1 | PNVA | 9 |
| Example 3 | 1 | PNVA | 10 |
| Comparative Example 8 | 1 | PNVA | N/A |

Evaluation of Transparent Conducting Film

<Sheet Resistance Value>

Using a non-contact type resistance measurement instrument (EC-80P, Probe Type High: 10 to 1000Ω/□, S-High: 1000 to 3000Ω/□ manufactured by Napson Corporation), sheet resistance values of the transparent conducting film laminates according to Examples and Comparative Examples were respectively measured, and evaluated based on the following. Table 2 shows the results.

Excellent: Average value of sheet resistance values at respective points is 50±5 Ω/□, and a is 10 or less.
Fair: Average value of sheet resistance values at respective points is 50±5 Ω/□, and σ is 30 or less.
Poor: Average value of sheet resistance values at respective points is not 50±5 Ω/□.

<Optical Property>

The transparent conducting film laminates according to Examples and Comparative Examples were respectively measured by Haze meter NDH 2000 (manufactured by Nippon Denshoku Industries Co., Ltd.), and evaluated based on the following. Table 2 shows the results.

Excellent: Haze is 1.0 or less, total light transmittance is 88% or more, and b* is 1.4 or less.
Fair: Two of the above conditions are satisfied.
Poor: One of the above conditions is satisfied, or none of the above conditions is satisfied.

<Tensile Property>

For the tensile test, a rectangular test piece having a width of 30 mm and a length of 160 mm, formed by cutting each of the transparent conducting film laminates obtained by Examples and Comparative Examples, was used. Gauge lines are previously formed at a 10 mm interval, in a portion corresponding to a portion between chucks, to divide the test piece into 10 parts, and a sheet resistance value of each part was measured, which was represented by $R_0$. Thereafter, the test piece was set on a precision universal testing machine (AUTOGRAPH AG-X, manufactured by Shimazu Corporation). When the test piece was set, the distance between chucks was 100 mm, and an arbitrary distortion was applied at a test speed of 50 mm/min and a test temperature of 155°C. After the tests, sheet resistance values were measured again at the ten points, which was represented by R. From these values, $R/R_0$ was calculated, and the results were judged in accordance with the following. Table 2 shows the results.

Excellent: Average value of $R/R_0$ at the 15% distortion is 10 or less.
Fair: Average value of $R/R_0$ at the 15% distortion is 10 or more.
Poor: None of the above is satisfied.

<Environmental Resistance>

The transparent conducting film laminates according to Examples and Comparative Examples were respectively placed in a high-temperature and high-humidity container kept at 85°C and 85%, and the changes in resistance values after 500 hours were calculated, and the results were judged in accordance with the following. Table 2 shows the results.

Excellent: Resistance value change is 10% or less.
Fair: Resistance value change is more than 10% and 20% or less.
Poor: Resistance value change is more than 20%.

Table 2

| | | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|
| Protection Film | Protection Film Ink No. | 1 | 2 | 10 | 3 | 4 | 5 | 6 | 7 | 8 | 9 | - |
| | Epoxy Compound | | | 1 | 1 | 2 | 1 | 1 | 2 | 1 | 1 | - |
| | Ep/COOH | 0 | 0 | 0.02 | 1.0 | 1.0 | 0.7 | 2.0 | 0.7 | 0.5 | 0.1 | - |
| | thermoplastic resin content (mass%) | 100 | 100 | 94 | 84 | 72 | 86 | 75 | 77 | 88 | 93 | - |
| Sheet Resistance Evaluation | $R_0$ (Ω/□) | 50 | 50 | 50 | 50 | 50 | 50 | 50 | 50 | 50 | 50 | 50 |
| | σ | 5 | 5 | 5 | 5 | 5 | 5 | 5 | 5 | 5 | 5 | 5 |
| | Evaluation | Exc | Exc | Exc | Exc | Exc | Exc | Exc | Exc | Exc | Exc | Exc |
| Optical Property | Haze(%) | 0.85 | 1.3 | 0.85 | 0.85 | 0.85 | 0.85 | 0.85 | 0.85 | 0.85 | 0.85 | 0.99 |
| | Light Transmittance (%) | 89 | 88 | 89 | 89 | 89 | 89 | 89 | 89 | 89 | 89 | 89 |
| | b* | 1.3 | 0.9 | 1.3 | 1.3 | 1.3 | 1.3 | 1.3 | 1.3 | 1.3 | 1.3 | 1.1 |
| | Evaluation | Exc | Fair | Exc | Exc | Exc | Exc | Exc | Exc | Exc | Exc | Exc |
| Tensile Property | $R/R_0$ | 10 | 10 | 25 | - | - | - | - | - | - | - | 8 |
| | Evaluation | Exc | Exc | Fair | Poor | Poor | Poor | Poor | Poor | Poor | Poor | Exc |
| Environmental Resistance | Evaluation | Exc | Exc | Exc | Exc | Exc | Exc | Exc | Exc | Exc | Exc | Poor |

* "Exc" refers to Excellent

In Table 2, the thermoplastic resin content (% by mass) of the protection film is calculated from each protection film ink composition used in each Example and Comparative Example (ratio (% by mass) of [the polyurethane containing a carboxy group or ETHOCEL (registered trademark)] relative to the non-volatile content (solid content), i.e., [total amount of the polyurethane containing a carboxy group, the epoxy compound, and the curing accelerator]).

Regarding each of the transparent conducting film laminates according to Example 1 and Example 2 which does not contain a curing component (epoxy compound, curing accelerator) as a resin component constituting the protection film, and regarding the transparent conducting film laminate according to Example 3 which contains 6% by mass or less curing component (epoxy compound, curing accelerator) as a resin component constituting the protection film, the contact resistance can be measured after the tensile test. Therefore, these transparent conducting film laminates can be applied for an electrode of an electronic device. However, regarding Comparative Examples 1 to 7 in each of which the amount of curing component (epoxy compound, curing accelerator) mixed in the protection film is more than 6% by mass (the amount of the polyurethane containing a carboxy group, i.e., thermoplastic resin, is less than 94% by mass), when a tensile test is performed, a sheet resistance value cannot be measured at the point that the distortion reaches 15% (distance between chucks being 115 mm), that is, the transparent conducting film laminate loses functions as a conducting body. It is believed that in case that a curing component is added to the protection film, cross-linking proceeds in the protection film, and cracks are generated in the protection film at an early stage of the tensile load application, which causes subsequent fracture of the silver nanowires, and causes the measurement value of the sheet resistance unavailable.

<Transparent Conducting Film Laminate for Molding with Transparent Conducting Film Laminate and Substrate (Front Plate)>

Example 4

A laminate for molding having a transparent conducting film laminate and a front plate was produced by adhering the front plate on a face, at the protection film, of the transparent conducting film laminate obtained by Example 1, with an OCA therebetween. As an OCA, CS9864UAS (thickness 100 $\mu$m), manufactured by Nitto Denko Corporation, was used. As a front plate, FS-2000H (thickness 0.5 mm), manufactured by Mitsubishi Gas Chemical Company, Inc., was used. Specifically, the OCA having separators on both of opposite faces thereof, was cut to have a predetermined size, and thereafter, one of the separators was removed, and one adhesive face was adhered on a surface of the front plate while reciprocating once using a hand roller (2 kg roller). Next, the other separator was removed, and the other adhesive face was adhered on a surface, at the protection film side, of the transparent conducting film laminate under the following conditions. Thereby, a laminate of the transparent conducting film laminate and the front plate (transparent conducting film laminate for molding) was produced, and prepared as a test piece.

(Adhering Conditions)

Surface Pressure: 0.4 MPa
Vacuum Degree: 30 Pa
Adhering Time: 2 seconds

Next, the test piece was provided in an autoclave, and subjected to the autoclave treatment at a temperature of 50°C, pressure of 0.5 MPa, for 15 minutes. Further, the test piece was left to stand still in an environment at 23°C and 50% RH, for one hour, and then, used in the test.

Example 5

Using the silver nanowire ink 2 instead of the silver nanowire ink 1, and using the transparent conducting film laminate produced in the same way as Example 1, a laminate of the transparent conducting film laminate and the front plate was produced in the same way as Example 4.

Comparative Example 9

Except that the transparent conducting film laminate according to Comparative Example 8 was used, others were the same as Example 4, and a laminate of the transparent conducting film laminate and the front plate was produced.

Comparative Example 10

Using the silver nanowire ink 2 instead of the silver nanowire ink 1, and using the transparent conducting film laminate produced in the same way as Comparative Example 8, a laminate of the transparent conducting film laminate and the front plate was produced in the same way as Comparative Example 9.

Evaluation of Transparent Conducting Film Laminate for Molding

<Sheet Resistance Value>

Using a non-contact type resistance measurement instrument (EC-80P, Probe Type High: 10 to 1000Ω/□, S-High: 1000 to 3000Ω/□ manufactured by Napson Corporation), sheet resistance values of the transparent conducting film laminates for molding according to Examples and Comparative Examples were respectively measured from the transparent substrate side (the face opposite to the face where the front plate was adhered), and evaluated based on the following. Table 3 shows the results.

Excellent: Average value of sheet resistance values at respective points is 50±5 Ω/□, and σ is 10 or less.
Fair: Average value of sheet resistance values at respective points is 50±5 Ω/□, and σ is 30 or less.
Poor: Average value of sheet resistance values at respective points is not 50±5 Ω/□.

<Optical Property>

The transparent conducting film laminates for molding according to Examples and Comparative Examples were respectively measured by Haze meter NDH 2000 (manufactured by Nippon Denshoku Industries Co., Ltd.), and evaluated based on the following. Table 3 shows the results.

Excellent: Haze is 1.0 or less, total light transmittance is 88% or more, and b* is 1.4 or less.
Fair: Two of the above conditions are satisfied.
Poor: One of the above conditions is satisfied, or none of the above conditions is satisfied.

<Tensile Property>

For the tensile test, a rectangular test piece having a width of 30 mm and a length of 160 mm, formed by cutting each of the transparent conducting film laminates for molding obtained by Examples and Comparative Examples, was used. Gauge lines are previously formed at a 10 mm interval, in a portion corresponding to a portion between chucks, to divide the test piece into 10 parts, and a sheet resistance value of each part was measured, which was represented by $R_0$. Thereafter, the test piece was set on a precision universal testing machine (AUTOGRAPH AG-X, manufactured by Shimazu Corporation). When the test piece was set, the distance between chucks was 100 mm, and an arbitrary distortion was applied at a test speed of 50 mm/min and a test temperature of 155°C. After the tests, sheet resistance values were measured again at the ten points, which was represented by R. From these values, $R/R_0$ was calculated, and the results were judged in accordance with the following. Table 3 shows the results.

Excellent: Average value of $R/R_0$ at the 15% distortion is 10 or less.
Fair: Average value of $R/R_0$ at the 15% distortion is 10 or more.
Poor: None of the above is satisfied.

<Environmental Resistance>

The transparent conducting film laminates for molding according to Examples and Comparative Examples were respectively placed in a high-temperature and high-humidity container kept at 85°C and 85%, and the changes in resistance values after 500 hours were calculated, and the results were judged in accordance with the following. Table 3 shows the results.

Excellent: Resistance value change is 10% or less.
Fair: Resistance value change is more than 10% and 20% or less.
Poor: Resistance value change is more than 20%.

Table 3

| | | Example 4 | Example 5 | Comparative Example 9 | Comparative Example 10 |
|---|---|---|---|---|---|
| Transparent Conducting Film | Binder Resin | PNVA | ETHOCEL | PNVA | ETHOCEL |
| Protection Film | Protection Film Ink No.<br>Epoxy Compound<br>Ep/COOH<br>thermoplastic resin content (mass%) | 1<br><br>0<br>100 | 1<br><br>0<br>100 | -<br>-<br>-<br>- | -<br>-<br>-<br>- |
| Substrate | Polycarbonate | FS-2000H | FS-2000H | FS-2000H | FS-2000H |
| Sheet Resistance Evaluation | $R_0$ (Ω/□)<br>σ<br>Evaluation | 50<br>5<br>Excellent | 50<br>5<br>Excellent | 50<br>5<br>Excellent | 50<br>5<br>Excellent |
| Optical Property | Haze (%)<br>Light Transmittance (%)<br>b*<br>Evaluation | 0.85<br>88<br>1.3<br>Excellent | 1.00<br>87<br>1.4<br>Fair | 0.85<br>88<br>1.0<br>Excellent | 0.90<br>87<br>1.4<br>Fair |
| Tensile Property | $R/R_0$<br>Evaluation | 10<br>Excellent | 5<br>Excellent | 15<br>Fair | 7<br>Excellent |
| Environmental Resistance | Evaluation | Excellent | Excellent | Poor | Poor |

Comparison between Example 4 and Example 1 suggests that, even in the case of the transparent conducting film laminate for molding formed by adhering the transparent conducting film laminate and the substrate, the obtained sheet resistance value, optical property, tensile property, and environmental resistance are substantially the same as those obtained for the transparent conducting film laminate by itself. Comparison between Example 4 and Example 5 reveals that Example 5 where ETHOCEL was used as a binder resin of the transparent conducting film has a superior tensile property, but a bit inferior optical property, compared to Example 4 where PNVA was used as a binder resin of the transparent conducting film. The reason why the transparent conducting film using ETHOCEL as a binder resin has a superior tensile property can be assumed that the glass transition temperature of ETHOCEL is lower than the glass transition temperature of PNVA, and thus, the transparent conducting film using ETHOCE can be deformed more easily under the test conditions. The influence on the sheet resistance value and the optical property caused by the adhesion of the OCA was very small.

The structural difference between Examples 4, 5 and Comparative Examples 9, 10 is presence/absence of the protection film in the transparent conducting film laminate. Comparative Examples 9, 10 using a transparent conducting film laminate having no protection film show remarkable deterioration of the environmental resistance, compared to Examples 4, 5 using a transparent conducting film laminate having a protection film. Because a watersoluble binder resin is used in the transparent conducting film, when no protection film is formed, the binder resin easily absorbs moisture, resulting in increasing the change in the resistance value.

## Claims

**1.** A transparent conducting film laminate comprising:

a transparent substrate made of a transparent thermoplastic resin film,
a transparent conducting film formed on at least one main face of the transparent substrate, and containing a binder resin and a metal nanowire, and
a protection film formed on the transparent conducting film, and containing a resin component, wherein
the binder resin contains at least on kind of poly-N-vinylacetamide, a copolymer containing 70 mol% or more

of N-vinylacetamide (NVA) as a monomer unit, and a cellulose-based resin, and
94% by mass or more of the resin component constituting the protection film is derived from a thermoplastic resin.

**2.** A transparent conducting film laminate according to claim 1, wherein the binder resin at least one of poly-N-vinylacetamide, and a copolymer containing 70 mol% or more of N-vinylacetamide (NVA) as a monomer unit.

**3.** A transparent conducting film laminate according to claim 1 or claim 2, wherein transparent thermoplastic resin film is a polycarbonate film.

**4.** A transparent conducting film laminate according to any one of claims 1 to 3, wherein the binder resin is poly-N-vinylacetamide.

**5.** A transparent conducting film laminate according to any one of claims 1 to 4, wherein the resin component constituting the protection film is derived from a thermoplastic resin containing polyurethane containing a carboxy group or ethyl cellulose.

**6.** A transparent conducting film laminate according to claim 5, wherein,

the resin component constituting the protection film is derived from a polyurethane containing a carboxy group and an epoxy resin containing two or more epoxy groups in a molecule,
a content of the epoxy resin having two more epoxy groups in one molecule in the resin component is more than 0% by mass and 6% by mass or less, and
regarding the carboxy group (COOH) contained in the polyurethane containing a carboxy group and the epoxy group (Ep) contained in the epoxy resin having two more epoxy groups in one molecule, the molar ratio (Ep/COOH) is more than 0 and 0.02 or less.

**7.** A transparent conducting film laminate according to any one of claim 1 to claim 6, wherein the metal nanowire is a silver nanowire.

**8.** A transparent conducting film laminate for molding comprising a transparent conducting film laminate according to any one of claim 1 to claim 7, and a resin film mainly composed of polycarbonate.

**INTERNATIONAL SEARCH REPORT**

International application No.
**PCT/JP2021/048067**

**A. CLASSIFICATION OF SUBJECT MATTER**

***B32B 27/18***(2006.01)i; ***H01B 5/00***(2006.01)i; ***H01B 5/14***(2006.01)i; ***G06F 3/041***(2006.01)i
FI: B32B27/18 J; H01B5/14 A; H01B5/00 H; G06F3/041 495

According to International Patent Classification (IPC) or to both national classification and IPC

**B. FIELDS SEARCHED**

Minimum documentation searched (classification system followed by classification symbols)

B32B1/00-43/00, C08K3/00-13/08, C08L1/00-101/14, C09D1/00-10/00, 101/00-201/10, H01B3/16-5/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2009/035059 A1 (KURARAY CO., LTD.) 19 March 2009 (2009-03-19)<br>claims, paragraphs [0018], [0029], examples | 1-4, 7-8<br>1-5, 7-8 |
| X<br>Y | JP 2009-505358 A (CAMBRIOS TECHNOLOGIES CORP.) 05 February 2009 (2009-02-05)<br>claims, paragraphs [0050], [0074] | 1, 3, 7-8<br>1-5, 7-8 |
| Y | WO 2017/155024 A1 (SHOWA DENKO K.K.) 14 September 2017 (2017-09-14)<br>claims, paragraph [0074] | 1-5, 7-8 |
| A | WO 2020/171022 A1 (SHOWA DENKO K.K.) 27 August 2020 (2020-08-27)<br>entire text | 1-8 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 January 2022** | **08 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/048067**

| Patent document cited in search report | Publication date (day/month/year) | Patent family member(s) | Publication date (day/month/year) |
|---|---|---|---|
| WO 2009/035059 A1 | 19 March 2009 | TW 200923971 A | |
| JP 2009-505358 A | 05 February 2009 | US 2007/0074316 A1<br>claims, paragraphs [0088], [0112]<br>WO 2007/022226 A2<br>EP 1922759 A2<br>CA 2618794 A<br>CN 101292362 A<br>SG 150514 A<br>AU 2006279590 A<br>AT 532217 T<br>HK 1122903 A<br>KR 10-2012-0128155 A<br>TW 200729241 A | |
| WO 2017/155024 A1 | 14 September 2017 | KR 10-2018-0099782 A<br>CN 108603064 A<br>TW 201802197 A | |
| WO 2020/171022 A1 | 27 August 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013246741 A
- JP 2021070181 A
- WO 2018101334 A
- WO 2008073143 A
- WO 2008046058 A


### Non-patent literature cited in the description


- *Chem. Mater.,* 2002, vol. 14, 4736
- *J. Am. Chem. Soc.,* 2007, vol. 129, 1733
- *J. Am. Chem. Soc.,* 2004, vol. 126, 3892-3901